**Europäisches Patentamt**

**European Patent Office**

**Office européen des brevets**

(19)

(11) Veröffentlichungsnummer: **0 032 908**
**B1**

(12) **EUROPÄISCHE PATENTSCHRIFT**

(45) Veröffentlichungstag der Patentschrift: **28.12.83**

(51) Int. Cl.³: **G 03 F 1/00**

(21) Anmeldenummer: **80901326.1**

(22) Anmeldetag: **29.07.80**

(86) Internationale Anmeldenummer:
**PCT/DE80/00110**

(87) Internationale Veröffentlichungsnummer:
**WO 81/00466 19.02.81 Gazette 81/5**

(54) VERFAHREN ZUR AUTOTYPISCHEN TONWERTZERLEGUNG.

(30) Priorität: **31.07.79 DE 2931098**

(43) Veröffentlichungstag der Anmeldung:
**05.08.81 Patentblatt 81/31**

(45) Bekanntmachung des Hinweises auf die Patenterteilung:
**28.12.83 Patentblatt 83/52**

(84) Benannte Vertragsstaaten:
**CH FR GB LI NL**

(56) Entgegenhaltungen:
**DE - A - 2 454 310**
**FR - A - 2 253 338**

**IBM Technical Disclosure Bulletin, Volume 9, November 1966, New York "Machol": "Pseudo-Halftone for representing continuous tone images in black-white facsimile systems", siehe Seiten 636-637, das ganze Dokument**

(73) Patentinhaber: **DR.-ING. RUDOLF HELL GmbH**
**Grenzstrasse 1-5**
**D-2300 Kiel 14 (DE)**

(72) Erfinder: **FISCHER, Gerhard**
**Mainstrasse 19**
**D-6050 Offenbach (DE)**
Erfinder: **SCHEUTER, Karl R.**
**Schillerstrasse 9**
**D-6100 Darmstadt 13 (DE)**

Verfahren zur autotypischen Tonwertzerlegung

Technisches Gebiet

Die vorliegende Erfindung betrifft ein Verfahren zur Herstellung einer Druckform durch Abtasten eines Originals und der Aufzeichnungsflächen entsprechend einem Abtast- bzw. konformen Aufzeichnungsraster unter Verwendung eines Zufallsgenerators für die Aufteilung kleinster noch druckbarer Punkte auf jedes Rasterfeld´ der Aufzeichnungsfläche, wobei die Anzahl dieser noch druckbaren Punkte den jeweiligen Tonwert bestimmt.

Zugrundeliegender Stand der Technik

Die autotypische Tonwertzerlegung wird heute im überwiegenden Maß mit Hilfe regelmäßiger Raster durchgeführt. Lediglich für Spezialzwecke, z.B. für den Faksimile-Druck, werden Hochfrequenzraster, d.h. Raster mit einer hohen Ortsfrequenz der Rasterpunkte bzw. Bildinformation mit einer unregelmäßigen Struktur verwendet (z.B. DE—OS 19 21 642; DE—OS 16 22 340). Die Rasterkonstante wird meist so gewählt, daß sich unter Berücksichtigung der Bedruckbarkeitseigenschaften der Bedruckstoffe und des zu reproduzierenden Dichteumfanges ein Optimum an Wiedergabeeigenschaften ergibt. Die statistische Verteilung der Rasterpunkte wird mit Hilfe eines Zufallsgenerators vorgenommen.

Die überwiegend gebrauchten Kontakt- und Kreuzlinienraster sind Ursache für nachteilige Dichtesprünge, die auftreten, wenn sich die aufbelichteten Punkte zu berühren beginnen. Durch Veränderungen der Punktform, z.B. Kettenpunktform, kann dieser Effekt vermindert werden.

Beim Mehrfarbendruck werden Teilbilder übereinander gedruckt. Dabei kommen bei Verwendung regelmäßiger Raster in regelmäßigen Wechsel Rasterpunkte nebeneinander oder übereinander zu liegen, so daß regelmäßige Muster erkennbar werden. Deren Größe ist von den Rasterkonstanten und der Winkelungsdifferenz der verwendeten Raster bestimmt. Sie werden als Moiré bezeichnet. Auch bei optimalen Winkelungsdifferenzen, wie z.B. in der DE—PS 20 12 728 (entspricht US—PS 4,084,183) beschrieben, bleibt ein Restmoiré, die sogenannten Rosetten, erhalten. Besonders bei hälftiger Flächendeckung und den üblichen, die Bedruckbarkeitseigenschaften berücksichtigenden Rasterkonstanten ist das Restmoiré aus normalem Beochachtungsabstand noch gut wahrnehmbar und wird deshalb als störend empfunden.

Bei der DE—OS 24 54 310 werden für die Reproduktion Matrixsätze bereitgestellt, von denen bei der Aufzeichnung die ausgesucht werden, welche den zu reproduzierenden Tonwert am nächsten treffen. Für 256 im Original vorkommende Dichtewerte werden 21 mögliche Grauwerte zur Verfügung gestellt und aus einer in einem Computer eingespeicherten Grauskala von 256 Tonwerten, denen diese 21 möglichen Grauwerte zugeordnet sind, werden dann wie beim Nachschlagen in einer Liste die Druckmatrizen ausgesucht, die für den entsprechenden Tonwertbereich repäsentativ sind.

Un Moiré zu unterdrücken, sind mehrere Reihen solcher Bit-Muster vorgesehen, jede Reihe repräsentiert zwar die gleiche Gruppe von Grauwerten, aber die Bit-Muster sind von Reihe zu Reihe verschieden, und es kann mittels Zufall ausgesucht werden, aus welcher Gruppe das Bit-Muster übernommen, wird, siehe hierzu Seite 5, Absatz 2. Nachteil dieser Art der Aufzeichnung ist, daß eine begrenzte Anzahl von Dichtewerten wirklich wiedergegeben werden können, und daß wegen der begrenzten Anzahl von Bit-Mustern Moiréerscheinungen auftreten können.

Weiterhin ist in der Fachzeitschrift "RCA-Review", September 1970, Vol. 31. No. 3 auf den Seiten 517 bis 533 ein Verfahren angegeben worden, bei dem die Rasterfeldfläche aus einer den Tonwert entsprechenden verschiedenen Zahl gleicher Punkte von der Größe des kleinsten druckbaren Punktes mit Hilfe eines Zufallsgenerators zusammengesetzt wird. Der kleinste Druckbare Punkt bedeckt flächenmäßig etwa 4 bis 8% der üblichen Rasterfeldgröße, d.h. auf dieser Fläche können maximal 25 solcher aufzubelichtenden kleinsten druckbaren Punkte untergebracht werden. Daraus ergibt sich wiederum, daß nur 25 Tonwertstufen möglich sind. Dies reicht aber für eine hochwertige Reproduktion nicht aus, da es zu Tonwertsprüngen innerhalb des reproduzierten Bildes an den Tonwertgrenzen kommt. Ein weiterer Nachteil dieses Verfahrens besteht darin, daß bei hohem Tonwert die kleinste innerhalb des Rasterfeldes freibleibende Fläche nicht groß genug gehalten werden kann, so daß Druckfarbe in ihr verläuft, was zu einer weiteren Verringerung der nutzbaren Tonwertstufen führt.

Insgesamt kann gesagt werden, daß bei Verwendung von Hochfrequenzrastern, d.h. Rastern hoher Ortsfrequenz mit einer unregelmäßigen Struktur, zwar kein Moiré auftritt, da diese Raster selbst nich periodisch sind. Solche Raster fanden aber bisher wegen magelder Linearität, schlechter Reproduzierbarkeit und ihres relativ geringen Dichteumfanges kaum Verwendung. Sie werden fast ausschließlich, wie bereits erwähnt, für Spezialzwecke, z.B. für den Faksimile-Druck oder die grafische Ausgabe bei der elektronischen Datenverarbeitung, verwendet.

Offenbarung der Erfindung

Der vorliegenden Erfindung liegt die Aufgabe zugrunde, ein Verfahren zur autotypischen Tonwertzerlegung zu entwickeln, das die genannten Nachteile vermeidet.

Gegenstand der vorliegenden Erfindung ist ein Verfahren, welches dadurch gekenzeichnet ist, daß jedes originalseitige Rasterfeld mittels Feinabtastung in Flächenelemente ($D_1,...,D_n$) aufgelöst und die Elemente etwa gleichen Tonwertes zu Unterflächen ($Da,...,Dd$) zusammengefaßt werden; und daß auch jedes aufzeichnungsseitige Rasterfeld aus Flächenelementen und Unterflächen ($D_a,...,D_d$) zusammengesetzt wird, wobei die Unterflächen aufzeichnungsseitig mit so vielen kleinsten noch druckbaren Punkten statistische verteilt gefüllt werden, daß der entsprechende Tonwert wiedergegeben wird.

Vorteilhafte Weiterbildungen der Erfindung sind außerdem noch in den Ansprüchen 2 bis 8 beschrieben.

Kurze Beschreibung der Erfindung

Die Erfindung wird im folgenden anhand der Figuren 1 bis 5 näher erläutert. Es zeigen:

Fig. 1 eine Darstellung der Auflösung der Abtastfläche in einzelne Flächenelemente gleichen Grauwertes,

Fig. 2 ein Beispiel für die Gewinnung der Druckmatrix aus den verschiedenen Teildruckmatrizen,

Fig. 3 ein Schaltbid für die Schaffung einer Prioritätsmatrix aus der Matrix der Bezugsflächen,

Fig. 4 ein Schaltbild für die Gewinnung der Druckmatrix aus der Prioritätsmatrix,

Fig. 5 ein Schaltbild für die Bildung von neuen Druckmatrizen aus einer gegebenen Druckmatrix.

Bester Weg zur Ausführung der Erfindung

Zunächst seien zum Verständnis der Erfindung die der Erfindung zugrundeliegenden Zusammenhänge und der Ablauf des Verfahrens angegeben. Bei der Aufzeichnung wird von einer Dichtemodulation Gebrauch gemacht, die mit Hilfe einer Modulation der Ortsfrequenz des kleinsten druckbaren Punktes realisiert wird. Als der kleinste druckbare Punkt wird ein Punkt bezeichnet, der aus normalem Beobachtungsabstand mit Sicherheit nicht als Punkt warhnehmbar, jedoch auf dem jeweiligen Bedruckstoff druckbar und ausreichend reproduzierbar ist.

Die Fläche $A_o$ des kleinsten druckbaren Punktes ist sowohl von den Materialeigenschaften, z.B. der Druckfarbe und des Bedruckstoffes, als auch von den Druckbedingungen, z.B. Druckgeschwindigkeit, und Umweltbedingungen, abhängig. Sie ist jedoch im allgemeinen innerhalb einer Druckform konstant. Die tatsächliche Fläche des kleinsten druckbaren Punktes unterliegt statistischen Schwankungen. Eine wahrscheinliche Fläche $A_o$ läßt sich jedoch angeben.

Ist $A_o$ die Fläche des kleinsten druckbaren Punktes, so kann man eine Bezugsfläche $A_v$ definieren, welche Bedingungen $A_v = n \ A_o$ genügt. Dem druckenden Punkt entspricht damit eine Elementarfläche

$$A_o = \frac{A_v \cdot}{A_n \cdot} \cdot$$

Die Anzahl $n+1$ der reproduzierbaren Graustufen folgt aus dem Flächenverhältnis

$$\frac{A_v}{A_o} \cdot$$

Jede Graustufe ist durch die Anzahl $m$ der innerhalb der Bezugsfläche gedruckten Punkte der Fläche $A_o$ gegeben. Wird $n$ ausreichend groß gewählt, dann werden die Dichtesprünge von sich folgenden Dichtestufen visuell nicht mehr erkennbar.

Die Form der Bezugsfläche muß der Bedingung genügen, daß ein lückenloser Anschluß an die benachbarten Bezugsflächen gewährleistet ist. Im allgemeinen ist es sinnvoll, die Form des kleinsten druckbaren Punktes und die Form der Bezugsfläche aufeinander abzustimmen.

Im Bereich von Graustufen geringer Dichte liegen in der Bezugsfläche nur wenige bedruckte Elementarflächen und im Bereich von Graustufen hoher Dichte dementsprechend nur wenige unbedruckte Elementarflächen. Bei mittleren Graustufen wechseln sich bedruckte und nicht bedruckte Elementarflächen häufig ab. Es ergibt sich ein Raster hoher Ortsfrequenz, so daß auch bei regelmäßiger Anordnung der bedruckten Elementarflächen das Restmoiré bei normalem Beobachtungsstand nicht erkennbar wird.

Die Freiheitsgrade des erfindungsgemäßen Verfahrens sind nur durch das Auflösungsvermögen des Auges und die Eigenschaften des Bedruckstoffes begrenzt. Diese Freiheitsgrade sind die Fläche $A_o$ und die Form des kleinsten druckbaren Punktes, die Größe der Bezugsfläche $A_v = n \cdot A_o$ und ihre Form sowie die Auswahl der $m$ zu bedruckenden Elementarflächen innerhalb der Bezugsfläche, Prinzipiell können für die optimale Wiedergabe eines Dichtewertes alle Freiheitsgrade genutzt werden. Für die praktische Anwendung des erfindungsgemäßen Verfahrens empfiehlt sich etwa folgende Reihenfolge von Entscheidungen:

1) Bestimmung der Mindeszahl $K$ der zur Reproduktion einer Vorlage in der gewünschten Qualität erforderlichen Dichtestufen.

2) Bestimmung der Fläche $A_o$ des kleinsten druckbaren Punktes unter Berücksichtigung von Materialeigenschaften und Druckbedingungen.

3) Bestimmung der Bezugsfläche $A_v = n \cdot A_o$ mit $n+1 = K$.

4) Bestimmung der Form der Bezugsfläche und des kleinsten druckbaren Punktes.

Zur Reproduktion jedes einzelnen Flächenelementes der Vorlage verbleiben dann folgende Entscheidungen:

5) Bestimmung der Graustufe m aus der Dichte des Flächenelementes der Vorlage.
6) Bestimmung der Positionen der m zu druckenden Punkte innerhalb der Bezugsfläche.

Sind die Größe der Bezugsfläche $A_v = n \cdot A_o$ und der Grauwert m bekannt, so ist die Anzahl P der Positionierungsmöglichkeiten gegeben durch

$$P = n! - m! - (n-m)!$$

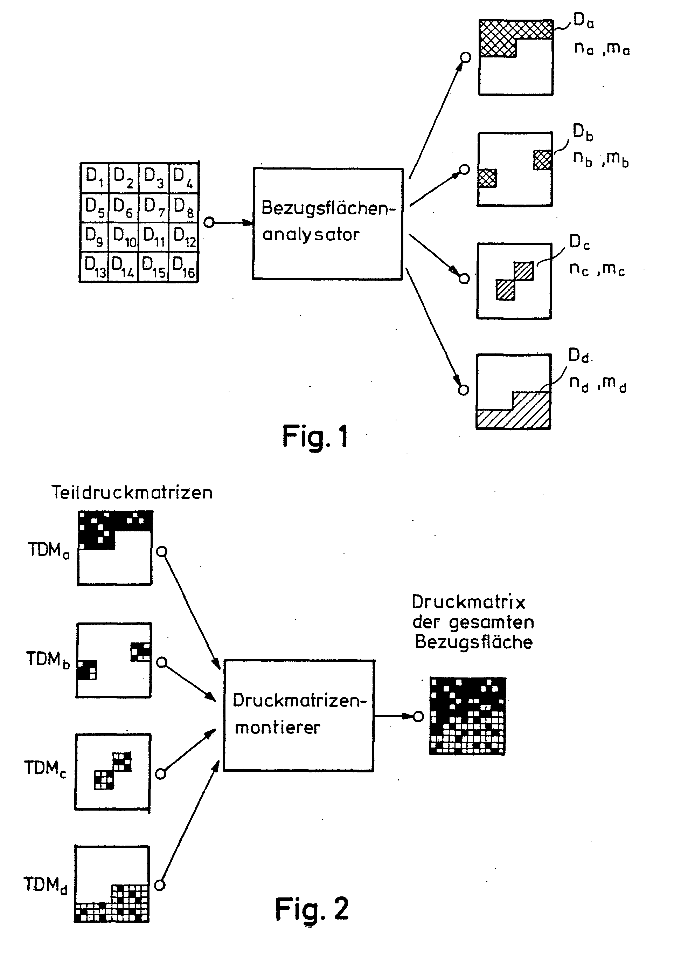

Wie aus Fig. 1 ersichtlich, wird bei dem vorliegenden Verfahren das Original bei der Abtastung in einzelne Felder unterteilt, die einer feinen Abtastung unterworfen werden und deren Größe den Rasterfeldern bei der späteren Reproduktion entspricht. In Figur 1 ist ein solches Feld, das auch als Bezugsfläche für die originalseitige Abtastung bezeichnet wird, in eine Matrix von einzelnen Flächenelementen $D_1$ bis $D_{16}$ unterteilt. Die Unterteilunt wird entsprechend der gewünschten Detailauflösung getroffen. Mit Hilfe eines Bezugsflächen-Analysators werden die einzelnen Flächenelemente $D_1$ bis $D_{16}$ auf ihren jeweiligen Tonwert untersucht und Flächenelemente etwa gleichen Tonwertes zu Unterflächen $D_a$, $D_b$, $D_c$ und $D_d$ zusammengesetzt. Wie man erkennt, ergeben diese Unterflächen nach Art von Teilmatrizen in der Überlagerung wieder die gesamte Matrix der Bezugsfläche. Von diesen Teilmatrizen werden dann jeweils Teildruckmatrizen $TDM_a$, $TDM_b$, $TDM_c$ und $TDM_d$ gebildet, die später in Figur 2 dargestellt sind. Diese Teildruckmatrizen $TDM_a$ bis $TDM_d$ entsprechen in ihrer Größe den Unterflächen $D_a$ bis $D_d$ und enthalten statistisch verteilt kleine, noch druckbare Punkte, die insgesamt den jeweiligen Tonwert angeben. Die Teildruckmatrizen sind zu diesem Zweck nach Zeilen und Spalten in kleine Druckelemente unterteilt, wobei die Einteilung so fein getroffen ist, daß jedes Druckelement der Größe eines noch druckbaren Punktes entspricht. Die Verteilung der Punkte auf diese Elemente, d.h. die Informationen, ob in einem solchen Element ein Punkt gedruckt werden soll oder nicht, wird, wie später noch erläutert, mit Hilfe eines Zufallsgenerators vorgenommen.

Fig. 2 zeigt einen Druckmatrizenmontierer, in dem aus den einzelnen Teildruckmatrizen anschließen wieder die Druckmatrix der gesamten Bezugsfläche erzeugt wird.

Zur Durchführung des Verfahrens können z.B. bei der Abtastung des Originals bekannte Scanner verwendet werden. So kann z.B. der Scanner, Type DC 300, der Fa. Dr.-Ing. Rudolf Hell GmbH, Kiel, Bundesrepublik Deutschland, zur Anwendung kommen, bei dem das von der Originalvorlage reflektierte oder durchgelassene Licht entsprechend den Teilfarben aufgeteilt wird. Die den Farbauszügen zugeordneten Lichtanteile werden dann jeweils einem Fabrechner zugeführt und dort verarbeitet. Meistens schließen sich noch Korrekturrechner an, welche teils automatisch, teils von Hand steuerbar einen willkürlichen Einfluß auf das Ausgangssignal des Farbrechners gestatten. Farbund Korrekturrechner erzeugen analoge oder digitale Signale, die jeweils dem korrigierten Dichtewert, d.h. der gewünschten Graustufe m entsprechen.

In dem bekannten Gerät steuern diese Signale eine Belichtungseinrichtung, wie sie in der DE—PS 21 07 738 (entspricht der US—PS—2,725,574), die auch den Gesamtgeräteaufbau zeigt, beschrieben ist.

Ersetzt man bei disem kommerziell erhältlichen Scanner den Rastergenerator der Fig. 1 der DE—PS 21 07 738, der auch in der DE—PS 20 12 728 (entspricht US—PS 4,084,183) beschrieben ist, durch den Rastergenerator, so kann das erfindungsgemäße Verfahren, direkt ohne weiteres erfinderisches Zutun und zusätzliche Experimente realisiert werden. Sowohl Abtast- und Aufzeichnungseinheit können unverändert übernommen werden. Es kann dies mittels Umschalter, die jeweils am Eingang und Ausgang der Rasterrechner vorgesehen sind, erfolgen, wenn beide Betriebsarten, konventionelle Rasterung und erfindungsgemäße Verfahren wünschenswert sind, oder der Anschluß der erfindungsgemäßen Rastereinheit kann direkt an den Digitalausgang der Abtasteinheit und die Ansteuerung der Mehrspurenaufzeichnungseinheit erfolgen. Selbstverständlich liegt es im Rahmen der Erfindung, bei dem Gerät DC 300 (bzw. DE PS 21 07 738) mehrere parallel arbeitende Abtasteinheiten, die eine Mehrspurabtastung mit der gewünschten Detailauflösung vornehmen, vorzusehen, um anstelle einer länger dauernden Abtastung mit nur einem Abtastorgan abtasten zu können. Es kann auch die vorhandene Mehrspuraufzeichnungseinheit mit einer größeren Anzahl von Einzelaufzeichungsorganen versehen werden, was dann insgesamt zu einer Erhöhung der Arbeitsgeschwindigkeit führt.

Da bei dem bekannten Gerät DC 300 (DE—PS 21 07 738) jedes einzelne Aufzeichnungsorgan der Mehrspurtasteinheit einzeln ansteuerbar ist, ist es mögliche, die Druckmatrix des erfindungsgemäßen Verfahrens ohne konstruktive Änderung der Aufzeichnungseinheit vorzunehman. Die Aufzeichnung des kleinsten noch druckbaren Punktes ist durch die Bemessung der Einschaltzeit der einzelnen Aufzeichnungsstrahlen möglich, was aus Fig. 2a der DE—PS 21 07 738 hervorgeht.

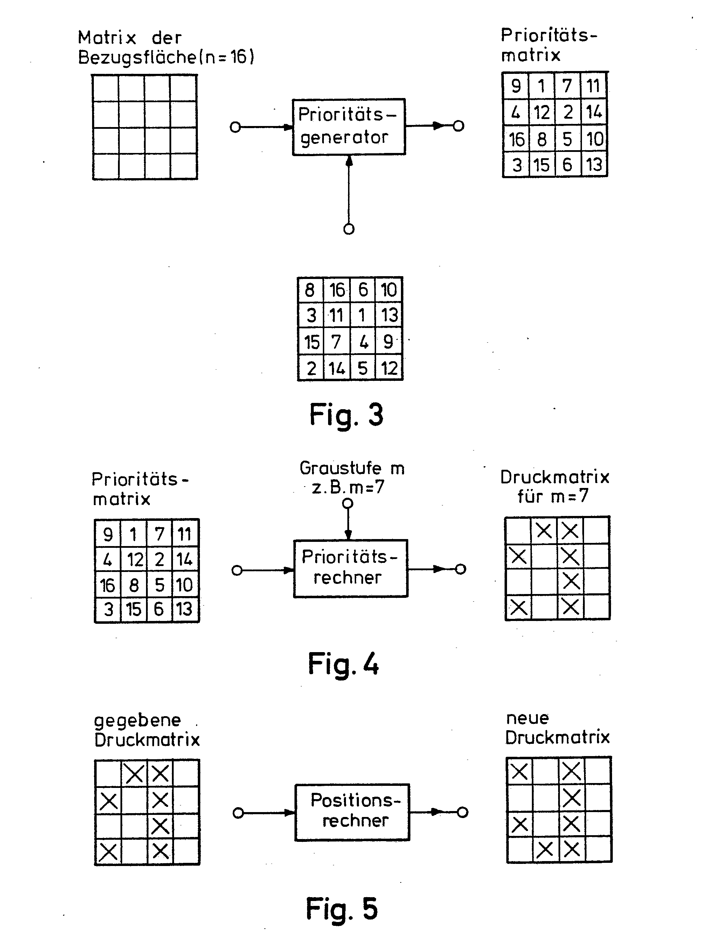

Figur 3 zeigt einen Prioritätsgenerator, welcher die Matrix der Bezugsfläche so ordnet, daß jedem Element der Matrix der Bezugsfläche eine ihm eigene Priorität zugeordnet ist. Es entsteht so eine Prioritätsmatrix mit n Elementen, welche n verschiedene Prioritäten aufweisen. Diese Prioritäten können zufällig oder nach vorgegebenen Regeln gewählt werden. Liegt eine Prioritätsmatrix bereits vor, so genügt est, die Prioritäten ihrer Elemente wieder zufällig, z.B. mit Hilfe eines Zufallsgenerators, welcher zufällig eine oder mehrere aus vorgegebenen Veränderungsmöglichkeiten auswählt, oder nach vorgegebenen Regeln zur vertauschen. Die Zahlenwerte j der unteren Matrix können beispielsweise nach j-1 überführt werden. Die Prioritätsmatrix kann einem Prioritätsrechner zugeführt werden, welcher—der Graustufe m entsprechend—Elemente der Prioritäten 1 bis m in der Druckmatrix kennzeichnet.

Fig. 4 zeigt, daß der Rechner aus einen Prioritätsrechner, enthalten kann, welcher aus einer gegebenen Prioritätsmatrix der gewünschten Graustufe m entsprechend m verschiedene Elemente in einer Druckmatrix kennzeichnet. Diese Kennzeichnung kann nach vorgegebenen. z.B. programmierbaren Regeln erfolgen, die dann entweder in zufälliger Reihenfolge, welche von einem Zufallsgenerator erzeugt wird, oder aber in vorgegebener Reihenfolge durchgeführt werden.

Figur 5 zeigt, daß der Rechner aus einen Positionsrechner enthalten kann, welcher die Elemente einer gegebenen Druckmatrix nach vorgegebenen Veränderungsgesetzen, jedoch in zufälliger Reihenfolge, die ein Zufallsgenerator erzeugen kann, oder aber in vorgegebener Reihenfolge vertauscht.

Steuert man den Rechner und die Belichtungsvorrichtung mit einem frei wählbaren, z.B. programmierbaren Takt, so stehen die bekannten Möglichkeiten zur freien Wahl von Vergrößerung und Verkleinerung zur Verfügung.

Die Größe und Forme des kleinsten druckenden Punktes stellt man in bekannter Weise, z.B. mittels der optischen Bündelung des Schreiblichtstrahles, ein.

Im Hinblick auf eine möglichst große Anzahl reproduzierbarer Graustufen ist es sinnvoll, die Bezugsfläche ausreichend groß zu bemessen.

So muß der Darstellung von z.B. m=101 Graustufen die Bezugsfläche n=100 Elementarflächen aufweisen. Andererseits kann die Wiedergabe von kleinen Details eine kleinere Bezugsflächengröße wünschbar erscheinen lassen. Das erfindungsgemäße Verfahren läßt beide Möglichkeiten zu.

Das der Bezugsfläche entsprechende Flächenstück der Vorlage tastet man zweckmäßig in einzelnen, der gewünschten Detailauflösung entsprechenden Flächenabschnitten ab und vergleicht dann die Dichtewerte der einzelnen Flächenabschnitte miteinander. Sind sie nahezu identisch, dann wird ihr Mittelwert als der Dichtewert der geamten Bezugsfläche weiterverarbeitet. Finden sich jedoch einzelne Flächenabschnitte mit erheblichen Dichteunterschieden, dann werden diese einzeln weiterverarbeitet.

Die Matrix der Bezugsfläche wird hierfür zunächst in Untermatrizen zerlegt, welche den aus der gewünschten Detailauflösung resultierenden Flächenabschnitten der Vorlage entsprechen, so daß die Untermatrizen mit jeweils nahezu identischen Dichtewerten zu Teilmatrizen zusammengefaßt werden können. Rechnerintern wird jede Teilmatrix und der ihr entsprechende mittlere Dichtewert so verarbeitet, wie dies oben für die gesamte Matrix der Bezugsfläche gezeigt wurde. Die dabei entstehenden Teildruckmatrizen werden dann zur Druckmatrix der gesamten Bezugsfläche zusammengesetzt.

Die Konsequenz der Aufteilung der Bezugsflächen ist, daß die Anzahl der möglichen Graustufen in jedem Flächenabschnitt um so geringer ist, je kleiner dieser Flächenabschnitt ist, andererseits aber ist sie für die gesamte Bezugsfläche unverändert. Da das Auge jedoch ohnehin die kleineren Flächenabschnitte nur bei großen Dichteunterschieden erkennen kann, genügen schon wenige Graustufen zur Detaildarstellung.

Es ist nun der große Vorteil des erfindungsgemäßen Verfahrens, daß die Anordnung der für die Erzeugung der m-ten Graustufe notwendigen m druckenden Punkte innerhalb der Bezugsfläche wegen ihrer Nichterkennbarkeit keiner Einschränkung unterliegt. Die Anordnung kann deshalb auch eine rein stochastische sein, wodurch auch ohne Rasterdrehung Moiré grundsätzlich vermieden wird.

In der Praxis ist ein vollständiges Unterdrücken des Moiré nicht immer erforderlich. In vielen Fällen ist Moiré zulässig unter den Bedingungen, daß alle auftretenden Moiréperioden, verglichen mit den Dimensionen des Bildes, ausreichend langsind. In der praktischen Anwendung des erfindungsgemäßen Verfahrens reicht deshalb eine quasistochastische Anordnung der druckenden Punkte oft aus.

**Patentansprüche**

1. Verfahren zur Herstellung einer Druckform durch Abtasten eines Originals und der Aufzeichnungsflächen entsprechend einem Abtast- bzw. konformen Aufzeichnungsraster unter Verwendung eines Zufallsgenerators für die Aufteilung kleinster noch druckbarer Punkte auf jedes Rasterfeld der Aufzeichnungsfläche, wobei die Anzahl dieser noch druckbaren Punkte den jeweiligen Tonwert bestimmt, dadurch gekennzeichnet, daß jedes originalseitige Rasterfeld mittels Feinabtastung in Flächenelemente ($D_1,...,D_n$) aufgelöst und die Elemente etwa gleichen Tonwertes zu Unterflächen ($D_a,...,D_d$) zusammengefaßt werden; und daß auch jedes aufzeichnungsseitige Rasterfeld aus Flächenelementen und Unterflächen ($D_a,... D_d$) zusammengesetzt wird, wobei die Unterflächen aufzeichnungsseitig mit so vielen kleinsten noch druckbaren Punkten statistisch verteilt gefüllt werden, daß der entsprechende Tonwert wiedergegeben wird.

2. Verfahren nach Anspruch 1, dadurch gekennzeichnet, daß die Größe der originalseitigen Flächenelemente entsprechend der gewünschten Detailauflösung gewählt wird.

3. Verfahren nach Anspruch 1 oder 2, dadurch gekennzeichnet, daß zur statistischen Verteilung der kleinsten noch druckbaren Punkte auf die Flächenelemente der Unterflächen jedes Flächenelement statistisch mit so vielen kleinsten noch druckbaren Punkten gefüllt wird, daß der entsprechende Tonwert wiedergegeben wird, wobei von einem Flächenelement zum nächsten die Verteilung variiert wird.

4. Verfahren nach Anspruch 3, dadurch gekennzeichnet, daß zur Füllung eines Flächenelementes eine Zufallmatrix mit binären Elementen vorgesehen ist.

5. Verfahren nach Anspruch 3, dadurch gekennzeichnet, daß zur Füllung eines Flächenelementes eine Prioritätsmatrix aus so vielen, zufällig verteilten Elementen wie den möglichen Tonwerten weniger 1 entspricht, gebildet wird, aus der dann eine binäre Druckmatrix erzeugt wird.

6. Verfahren nach Anspruch 5, dadurch gekennzeichnet, daß die Elemente der Prioritätsmatrix beim Übergang von einem Flächenelement zum nächsten durch Vertauschung von Zahlenelementen und/oder durch Vertauschen der Reihenfolge von Zeilen und/oder Spalten verändert werden.

7. Verfahren nach Anspruch 4, dadurch gekennzeichnet, daß die binären Elemente beim Übergang von einem Flächenelement zum nächsten durch Vertauschung der Reihenfolge von Zeilen und/oder Spalten verändert werden.

8. Verfahren nach einem der vorangehenden Ansprüche, dadurch gekennzeichnet, daß die kleinsten noch druckbaren Punkte die Form eines regelmäßigen Sechsecks haben.

**Revendications**

1. Procédé pour réaliser une forme d'impression par détection d'un original et des surfaces d'inscription en fonction d'une trame de détection ou d'inscription conforme en utilisant un générateur aléatoire pour la subdivision des plus petits points encore susceptibles d'être imprimés sur chaque champ de trame de la surface d'inscription, le nombre de ces points encore susceptibles d'être imprimés déterminant la valeur de teinte correspondante, procédé caractérisé en ce que chaque champ de trame de l'original est résolu par une détection fine en éléments de surface $(D_1,...,D_n)$ et les éléments sont réunis en des sous-surfaces $(D_a...D_d)$ de valeurs de teinte sensiblement égales et en ce que chaque champ de trame du côté de l'inscription est formé d'éléments de surface et de sous-surfaces $(D_a...D_d)$, les sous-surfaces du côté de l'inscription étant remplies suivant une répartition statistique d'autant de points les plus petits susceptibles d'être imprimés pour reproduire la valeur de teinte correspondante.

2. Procédé selon la revendication 1, caractérisé en ce que la grandeur des éléments de surface du côté de l'original est choisie en fonction de la résolution de détails souhaitée.

3. Procédé selon l'une quelconque des revendications 1 et 2, caractérisé en ce que pour la répartition statistique des plus petits points susceptibles d'être encore imprimés sur les éléments de surface des sous-surfaces, on remplit chaque élément de surface statistiquement avec autant de petits points encore susceptibles d'être imprimés que l'on reproduit la valeur de teinte correspondante, la répartition étant changée d'un élément de surface à l'élément suivant.

4. Procédé selon la revendication 3, caractérisé en ce que pour remplir un élément de surface, il est prévu une matrice aléatoire à éléments binaires.

5. Procédé selon la revendication 3, caractérisé en ce que pour remplir un élément de surface, on forme une matrice de priorités avec autant d'éléments à répartition aléatoire que les valeurs de teinte possibles diminuées de 1, et à partir desquels on forme une matrice d'impression binaire.

6. Procédé selon la revendication 5, caractérisé en ce que les éléments de la matrice de priorités lors de la transition d'un élément de surface à l'élément suivant sont changés par échange des éléments de nombre et/ou par échange de la succession des lignes et/ou des colonnes.

7. Procédé selon la revendication 4, caractérisé en ce que les éléments binaires sont changés lors du passage d'un élément de surface à l'élément suivant par échange de la succession des lignes et/ou des colonnes.

8. Procédé selon l'une des revendications précédentes, caractérisé en ce que les plus petits point encore susceptibles d'être imprimés ont la forme d'un hexagone régulier.

**Claims**

1. Method for the production of a printing block by scanning an original and the recording surfaces in accordance with a scanning or conformable recording screen under application of a random generator for separation of the smallest still printable dots on each screen area of the recording surface, the number of these still printable dots determining the tonal value in question, characterised in that each screen area at the original side is resolved by precision scanning into areal elements $(D_1,...,D_n)$ and the elements of approximately identical tonal value are combined into sub-areas $(D_a,...,D_d)$; and that each screen area at the recording side also comprises areal elements and sub-areas $(D_a,...,D_d)$, the sub-areas at the recording side being filled with so many statistically distributed smallest and still printable dots, that the corresponding tonal value is reproduced.

2. Method according to claim 1, characterised in that the size of the areal elements at the side of the original is selected as a function of the required detail resolution.

3. Method according to claim 1 or 2, characterised in that for statistical distribution of the smallest still printable dots on the areal elements of the sub-areas, each areal element is statistically filled with so many smallest still printable dots that the corresponding tonal value is reproduced, the distribution being varied from one areal element to the next.

4. Method according to claim 3, characterised in that a random matrix comprising binary elements is provided for filling an areal element.

5. Method according to claim 3, characterised in that a priority matrix is formed from as many randomly distributed elements as corresponds to the possible tonal values minus 1, from which a binary print matrix is then produced, for filling an areal element.

6. Method according to claim 5, characterised in that the elements of the priority matrix are varied during transition from one areal element to the next by inter-exchange of numeric elements and/or by inter-exchange of the order of lines and/or columns.

7. Method according to claim 4, characterised in that the binary elements are varied during transition from one areal element to the next by interchange of the order of lines and/or columns.

8. Method according to one of the preceding claims, characterised in that the smallest still printable dots have the shape of a regular hexagon.

Fig. 1

Teildruckmatrizen

TDM_a

TDM_b

TDM_c

TDM_d

Druckmatrizenmontierer

Druckmatrix
der gesamten
Bezugsfläche

Fig. 2

1

Matrix der
Bezugsfläche (n = 16)

Prioritätsgenerator

Prioritätsmatrix

| 9 | 1 | 7 | 11 |
|---|---|---|---|
| 4 | 12 | 2 | 14 |
| 16 | 8 | 5 | 10 |
| 3 | 15 | 6 | 13 |

| 8 | 16 | 6 | 10 |
|---|---|---|---|
| 3 | 11 | 1 | 13 |
| 15 | 7 | 4 | 9 |
| 2 | 14 | 5 | 12 |

## Fig. 3

Prioritätsmatrix

| 9 | 1 | 7 | 11 |
|---|---|---|---|
| 4 | 12 | 2 | 14 |
| 16 | 8 | 5 | 10 |
| 3 | 15 | 6 | 13 |

Graustufe m
z.B. m=7

Prioritätsrechner

Druckmatrix
für m=7

## Fig. 4

gegebene
Druckmatrix

Positionsrechner

neue
Druckmatrix

## Fig. 5